# EUROPEAN PATENT SPECIFICATION

(11) **EP 1 946 685 B1**
(45) Date of publication and mention of the grant of the patent: **04.09.2013**
(21) Application number: 07001153.1
(22) Date of filing: 19.01.2007
(51) Int. Cl.: A47J 37/06

(54) **Grilling plate**
Grillplatte
Plaque de grill

(43) Date of publication of application: 23.07.2008
(73) Proprietor: Electrolux Home Products Corporation N.V., 1130 Brussel (BE)
(72) Inventor: Leikam, Jürgen, 91161 Hilpoltstein (DE); Neukamm, Alwin, 91452 Wilhermsdorf (DE); Gauss, Fabian, 91555 Feuchtwangen (DE); Förster, Dieter, 91583 Schillingsfürst (DE)
(74) Representative: Baumgartl, Gerhard Willi

(56) References cited:
- EP-A1- 0 970 648
- DE-U1- 20 215 979

## Description

The invention relates to a grilling plate, which is divided into different sections, wherein at least a part of the sections is connected to a heating element.

Grilling plates of this kind are well known in the art. Dishes can be cooked by placing them on the upper surface of the grilling plate. Therefore a number of heating elements are arranged underneath the grilling plate, dividing it into different grilling areas or grilling sections.

Sometimes, a sandwich structure is used as basic plate of the grilling plate, wherein a good conductive middle layer from aluminium is arranged between a top layer and a bottom layer made of stainless steel.

In EP 0 970 648 A1 a sandwich structure for a grilling plate is disclosed with copper for the middle layer and stainless steel for the two outer layers.

Advantageously, such grilling plates obtain an evenly distributed temperature which facilitates the grilling or cooking process.

On the other hand, it is not always necessary to use the whole surface of the grilling plate for grilling dishes. In the case that only a part of the grilling plate is necessary it is disadvantageous that the temperature is uniformly distributed along the entire area of the grilling plate. Areas, which should remain cold are heated up undesirably.

As far as only a part of the grilling plate is heated up and no complete temperature equalisation occurs thermal tensions can come into being which are also detrimental.

DE 202 15 979 U1 discloses a grilling plate having a sandwich structure with three layers being fixed to each other, the upper layer made of sheet metal of ferritic steel, the lower layer made of austenitic or ferritic steel and the thick middle layer made of aluminium. In wide intermediate areas separating working areas from each other the lower and the middle layer are not present and the remaining sheet metal of the upper layer is deformed, in particular bent or deep-drawn, into a V shape forming an elevated edge or into a slope connecting two working zones at different height levels. These intermediate areas with only the deformed upper layer extend to the edge or border area of the plate.

It is an object of the invention to provide a grilling plate which allows for heating up only a desired section or desired sections of it. The heat flow from one section to another section should be hindered. Furthermore, the development of thermal tensions within the grilling plate should be eliminated and the design be rigid and stable. The production of the grilling plate should in spite of this be easy and inexpensive.

The solution of this object according to the invention is accomplished by the features of claim 1.

The grilling plate according to claim 1 is divided into different sections, wherein at least a part of the sections is connected to a heating element, and comprises a plate forming the top side of it and extending uniformly along all sections, wherein the sections are divided by at least one groove being arranged in the bottom side of the plate.

The at least one groove extends into the proximity of the border area of the plate but keeping a defined distance from the border area. By this design a sufficient rigidity and stability of the grilling plate is maintained.

The grooves machined into the bottom surface of the grilling plate make sure that only a minor heat transfer can occur from one section to another. Also thermal tensions can not arise as it would be the case that the grilling plate would be designed as pre-know (solid homogeneous plate).

According to a first embodiment of the invention the plate consists of at least one layer. In this case the mentioned groove is machined in a homogeneous plate to create the insulating effect.

Preferably, the plate consists of at least two layers. More specifically, the layers can be made of at least two different materials, especially metals.

Advantageously, the grilling plate can consists of three layers, wherein a top layer and a bottom layer are made of steel, especially stainless steel, and wherein a medium layer is made of aluminium. Also copper can be employed as the material for the medium layer. Finally, it is possible to use also steel for the medium layer which needs not to be necessarily stainless steel.

In this case it is a preferred solution that the at least one groove extends through all layers except the top layer.

One groove can be arranged in the grilling plate to separate the grilling plate into two sections.

A preferred alternative solution comes up with two grooves which are arranged to separate the grilling plate into four sections. In this case the two grooves are preferably arranged in a crosswise manner.

The width of the at least one groove is preferably between 1 mm and 30 mm.

Normally, the grilling plate has a substantial rectangular shape. An alternative embodiment comes up with a substantial rounded shape of the grilling plate.

Due to the fact that the grilling plate has more than one section which is separately heatable and which is thermally separated from an adjacent section by the described groove the thermal conductivity from one section to another is reduced. Thus, heat brought into a section remains there and an adjacent section is not heated up undesired.

Also thermal tensions in the grilling plate can be reduced as the grooves function as an expansion joint.

So, a distortion of the grilling plate is reduced.

Beneficially, separate zones with different temperatures can be obtained along the surface of the grilling plate. The energy consumption is also reduced because heat can not flow easily away from a section to another. Consequently, the final desired temperature of a section of the grilling plate is reached earlier.

So, it becomes easier to cook or grill different dishes at different individual temperatures on one grilling plate.

In the drawings embodiments of the invention are depicted.
- FIG 1: shows schematically a perspective view of a grilling plate which is arranged on a carrier structure,
- FIG 2: shows a cross sectional view according to the cut A-B of FIG 1 showing the cross section through a grilling plate,
- FIG 3: shows the grilling plate according FIG 1 with its up side down,
- FIG 4: shows the top plan view on the bottom side of the grilling plate with four grilling sections with its up side down and
- FIG 5: shows the top plan view on the bottom side of the grilling plate with two grilling sections with its up side down.

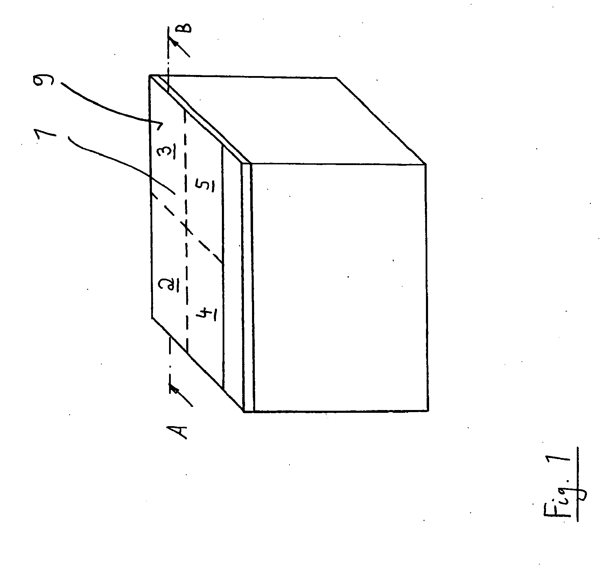

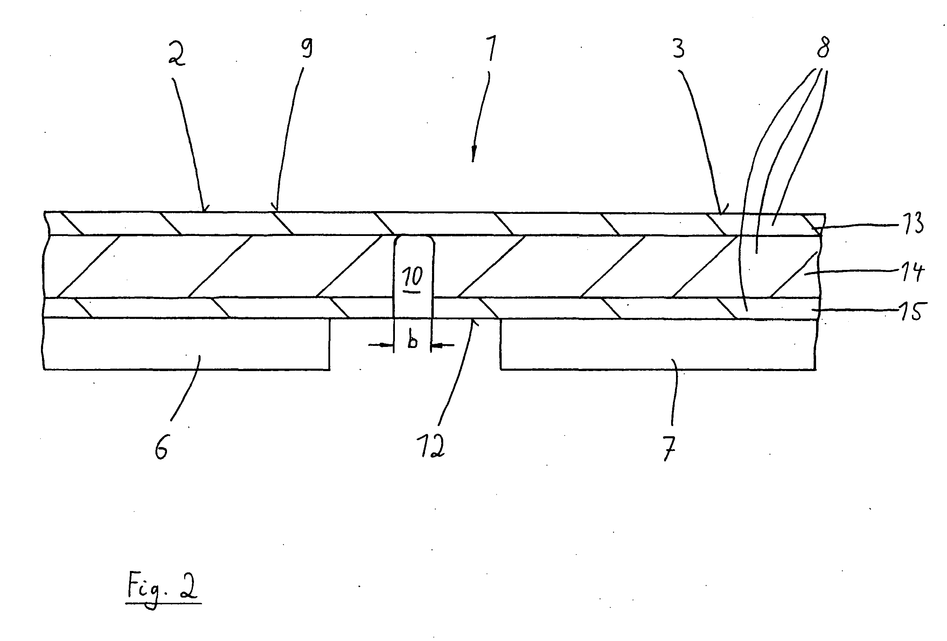

FIG 1 shows a grilling plate 1 on a carrier structure. The grilling plate 1 is divided into four sections 2, 3, 4, 5 without the top side or top surface 9 of the grilling plate 1 being interrupted; it consists of a top plate (13, see FIG 2) which extends continuously along the whole top area of the grilling plate 1.

As can be seen from the schematic drawing according to FIG 2 (showing the cross section A-B according to FIG 1) the grilling plate 1 has a plate 8. The plate 8 consists of three layers 13, 14, 15. The upper and the bottom layer 13, 15 are made of stainless steel. The medium layer 14 is made of aluminium. Alternatively, it can also be made e. g. from copper; also normal steel can be used as material for the medium layer 14.

Underneath each section 2, 3, 4, 5 a separate heating element 6, 7 (see FIG 2) is arranged to individually heat up one section.

To hinder thermal flow from one section to another, a groove 10 is arranged in the grilling plate 1 according FIG 2. The width b of the groove 10 is usually between 1 mm and 30 mm. The mentioned dimension of the groove is an example only. Also, other dimensions can be employed.

As can be seen the groove 10 cuts completely the bottom layer 15 and the highly conductive medium layer 14, but does not influence the top layer 13 of the plate 8.

Consequently, the top side 9 of the grilling plate 1 is not interrupted but homogeneously designed. Instead, the bottom side 12 has the interruption by the groove 10.

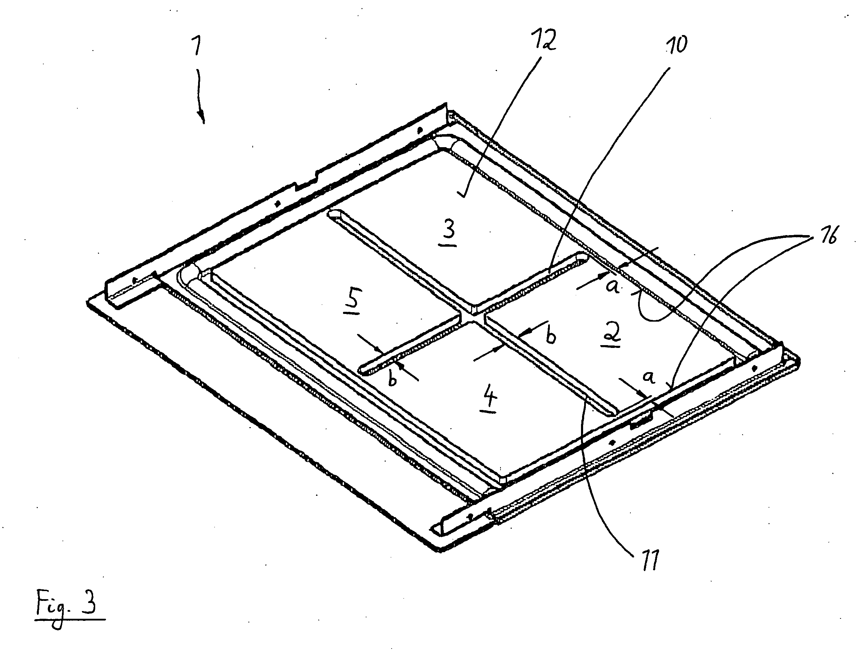

Different designs of the grilling plate 1 are depicted in figures 3, 4 and 5, where the grilling plate 1 is shown with the up side down.

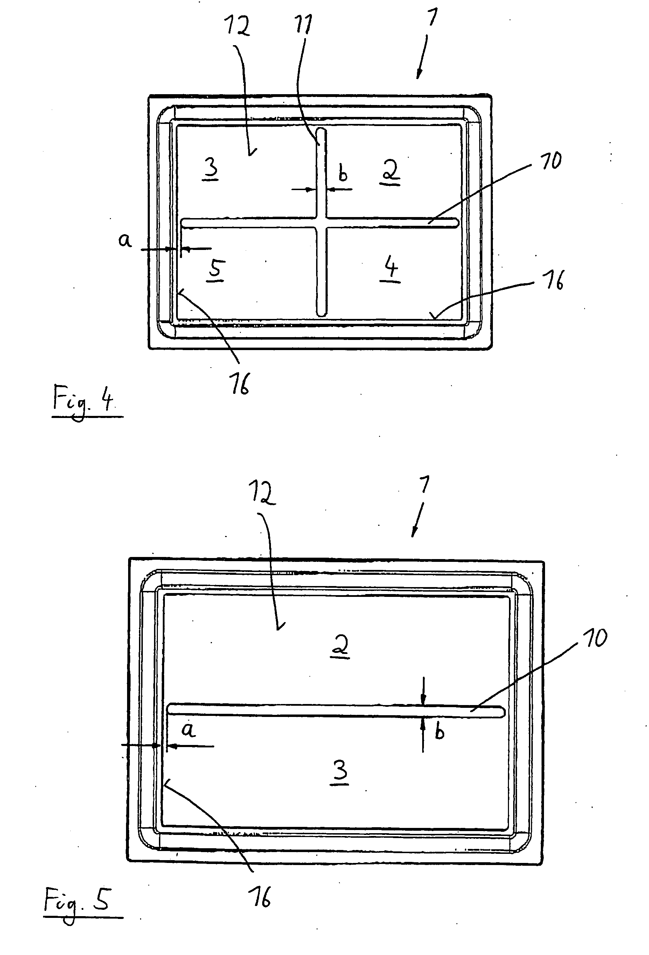

The solution according to figures 3 and 4 comes up with two crosswise arranged grooves 10 and 11 dividing the grilling plate 1 in four sections 2, 3, 4, 5.

The design according to FIG 5 shows only two sections 2, 3, which are delimited by the groove 10.

The extension of the grooves 10, 11 is limited in all depicted solutions according to the embodiments of the invention in the FIGURES. The grooves 10, 11 remain at a distance a from the border lines 16 of the grilling plate. This ensures a high stiffness of the grilling plate 1 in spite of the grooves 10, 11. The dimension of the distance a can be e. g. between 5 mm and 30 mm.

While the groove 10 runs transversely across the plate in FIG 5 it is also a preferred embodiment of the invention that the groove 10 is oriented in a way rotated by 90° compared to that one depicted in FIG 5.

All sections 2, 3, 4, 5 of the grilling plate can be heated individually by respective separate heating elements to a desired individual temperature. Due to the insulation effect of the grooves 10, 11 the heat remains in the respective sections 2, 3, 4, 5. Consequently, a dish can be grilled on a section while the adjacent section remains substantial cold.

The production of the grilling plate 1 is quite easy and thus economical. The grooves can be machined in a cheap way by means of a milling process.

As only a part of the grilling plate, i. e. the respective wanted section 2, 3, 4, 5, is warmed up the energy consumption of the grilling plate is reduced compared with pre-known solutions.

Also the final temperature necessary for cooking a dish is reached quicker as it is the case with conventional grilling plates.

Due to the preferred design of the grilling plate with different sections a plurality of different dishes can be grilled with their optimum grilling temperatures because the influence between the different sections is minimized.

The distortion of the grilling plate 1 during warming up is also minimized.

Within a single section 2, 3, 4, 5 the temperature equilisation is occurring quite fast as the highly conductive layer 14 from aluminium extends across the whole section.

The thermal expansion of the grilling plate 1 is smaller than in conventional plates as parts of the plate 8 are removed. The grooves 10, 11 between two sections 2, 3, 4, 5 function as expansion joints.

### Reference Numerals

- 1: Grilling plate
- 2: Section
- 3: Section
- 4: Section
- 5: Section
- 6: Heating element
- 7: Heating element
- 8: Plate
- 9: Top side
- 10: Groove
- 11: Groove
- 12: Bottom side
- 13: Layer
- 14: Layer
- 15: Layer
- 16: Border area

- a: Distance
- b: Width

## Claims

1. Grilling plate (1), which is divided into different sections (2, 3, 4, 5),
wherein at least a part of the sections (2, 3, 4, 5) is connected to a heating element (6, 7),
wherein the grilling plate (1) comprises a plate (8) forming the top side (9) of it and extending uniformly along all sections (2, 3, 4, 5), wherein the sections (2, 3, 4, 5) are divided by at least one groove (10, 11) being arranged in the bottom side (12) of the plate (8)
wherein the at least one groove (10, 11) extends into the proximity of the border area (16) of the plate (8) keeping a defined distance (a) from the border area (16).

2. Grilling plate according to claim 1, **characterized in that** the plate (8) consists of at least one layer (13).

3. Grilling plate according to claim 1, **characterized in that** the plate (8) consists of at least two layers (13, 14, 15).

4. Grilling plate according to claim 3, **characterized in that** the layers (13, 14, 15) are made of at least two different materials.

5. Grilling plate according to claim 4, **characterized in that** the layers (13, 14, 15) are made of at least two different metals.

6. Grilling plate according to claim 5, **characterized in that** the grilling plate (1) consists of three layers (13, 14, 15), wherein a top layer (13) and a bottom layer (15) are made of steel, especially stainless steel, and wherein a medium layer (14) is made of aluminium.

7. Grilling plate according to claim 5, **characterized in that** the grilling plate (1) consists of three layers (13, 14, 15), wherein a top layer (13) and a bottom layer (15) are made of steel, especially stainless steel, and wherein a medium layer (14) is made of copper.

8. Grilling plate according to at least one of claims 3 to 7, **characterized in that** the at least one groove (10, 11) extends through all layers (14, 15) except the top layer (13).

9. Grilling plate according to at least one of claims 1 to 8, **characterized in that** one groove (10, 11) is arranged to separate the grilling plate (1) into two sections (2, 3).

10. Grilling plate according to at least one of claims 1 to 8, **characterized in that** two grooves (10, 11) are arranged to separate the grilling plate (1) into four sections (2, 3, 4, 5).

11. Grilling plate according to claim 10, **characterized in that** the two grooves (10, 11) are arranged in a crosswise manner.

12. Grilling plate according to at least one of claims 1 to 11, **characterized in that** the width (b) of the at least one groove (10, 11) is between 1 mm and 30 mm.

13. Grilling plate according to at least one of claims 1 to 12, **characterized in that** the grilling plate (1) has a substantial rectangular shape.

14. Grilling plate according to at least one of claims 1 to 12, **characterized in that** the grilling plate (1) has a substantial rounded shape.

## Patentansprüche

1. Grillplatte (1), die in unterschiedliche Abschnitte (2, 3, 4, 5) unterteilt ist,
wobei mindestens ein Teil der Abschnitte (2, 3, 4, 5) mit einem Hexzelement (6, 7) verbunden ist,
wobei die Grillplatte (1) eine Platte (8) umfasst, die ihre Oberseite (9) bildet und sich gleichmäßig über alle Abschnitte (2, 3, 4, 5) erstreckt, wobei die Abschnitte (2, 3, 4, 5) durch mindestens eine Rille (10, 11) voneinander getrennt sind, die in der Unterseite (12) der Platte (8) gebildet ist,
wobei sich die mindestens eine Rille (10, 11) in die Nähe des Grenzbereichs (16) der Platte (8) erstreckt, wobei sie einen definierten Abstand (a) von dem Grenzbereich (16) einhält.

2. Grillplatte nach Anspruch 1, **dadurch gekennzeichnet, dass** die Platte (8) aus mindestens einer Schicht (13) gebildet ist.

3. Grillplatte nach Anspruch 1, **dadurch gekennzeichnet, dass** die Platte (8) aus mindestens zwei Schichten (13, 14, 15) gebildet ist.

4. Grillplatte nach Anspruch 3, **dadurch gekennzeichnet, dass** die Schichten (13, 14, 15) aus mindestens zwei unterschiedlichen Materialien hergestellt sind.

5. Grillplatte nach Anspruch 4, **dadurch gekennzeichnet, dass** die Schichten (13, 14, 15) aus mindestens zwei unterschiedlichen Metallen hergestellt sind.

6. Grillplatte nach Anspruch 5, **dadurch gekennzeichnet, dass** die Grillplatte (1) aus drei Schichten (13, 14, 15) gebildet ist, wobei eine obere Schicht (13) und eine untere Schicht (15) aus Stahl, insbesondere rostfreiem Stahl hergestellt sind und wobei eine mittlere Schicht (14) aus Aluminium hergestellt ist.

7. Grillplatte nach Anspruch 5, **dadurch gekennzeichnet, dass** die Grillplatte (1) aus drei Schichten (13, 14, 15) hergestellt ist, wobei eine obere Schicht (13) und eine untere Schicht (15) aus Stahl, insbesondere rostfreiem Stahl, hergestellt sind und wobei eine mittlere Schicht (14) aus Kupfer hergestellt ist.

8. Grillplatte nach mindestens einem der Ansprüche 3 bis 7, **dadurch gekennzeichnet, dass** sich die mindestens eine Rille (10, 11) durch alle Schichten (14, 15) mit Ausnahme der oberen Schicht (13) erstreckt.

9. Grillplatte nach mindestens einem der Ansprüche 1 bis 8, **dadurch gekennzeichnet, dass** eine Rille (10, 11) angeordnet ist, um die Grillplatte (1) in zwei Abschnitte (2, 3) zu unterteilen.

10. Grillplatte nach mindestens einem der Ansprüche 1 bis 8, **dadurch gekennzeichnet, dass** zwei Rillen (10, 11) angeordnet sind, um die Grillplatte (1) in vier Abschnitte (2, 3, 4, 5) zu unterteilen.

11. Grillplatte nach Anspruch 10, **dadurch gekennzeichnet, dass** die zwei Rillen (10, 11) kreuzförmig angeordnet sind.

12. Grillplatte nach mindestens einem der Ansprüche 1 bis 11, **dadurch gekennzeichnet, dass** die Breite (b) der mindestens einen Rille (10, 11) zwischen 1 mm und 30 mm beträgt.

13. Grillplatte nach mindestens einem der Ansprüche 1 bis 12, **dadurch gekennzeichnet, dass** die Grillplatte (1) eine im Wesentlichen rechteckige Form aufweist.

14. Grillplatte nach mindestens einem der Ansprüche 1 bis 12, **dadurch gekennzeichnet, dass** die Grillplatte (1) eine im Wesentlichen gerundete Form aufweist.

## Revendications

1. Plaque de gril (1), qui est divisée en différentes sections (2, 3, 4, 5),
où au moins une partie des sections (2, 3, 4, 5) est reliée à un élément chauffant (6, 7),
où la plaque de gril (1) comprend une plaque (8) formant le côté supérieur (9) de celle-ci et s'étendant d'une manière uniforme le long de toutes les sections (2, 3, 4, 5), où les sections (2, 3, 4, 5) sont divisées par au moins une rainure (10, 11) agencée dans le côté inférieur (12) de la plaque (8),
où la au moins une rainure (10, 11) s'étend jusqu'à proximité de la zone de bord (16) de la plaque (8) en maintenant une distance définie (a) de la zone de bord (16).

2. Plaque de gril selon la revendication 1, **caractérisée en ce que** la plaque (8) est constituée d'au moins une couche (13).

3. Plaque de gril selon la revendication 1, **caractérisée en ce que** la plaque (8) est constituée d'au moins deux couches (13, 14, 15).

4. Plaque de gril selon la revendication 3, **caractérisée en ce que** les couches (13, 14, 15) sont réalisées en au moins deux matériaux différents.

5. Plaque de gril selon la revendication 4, **caractérisée en ce que** les couches (13, 14, 15) sont réalisées en au moins deux métaux différents.

6. Plaque de gril selon la revendication 5, **caractérisée en ce que** la plaque de gril (1) est constituée de trois couches (13, 14, 15), où une couche supérieure (13) et une couche inférieure (15) sont réalisées en acier, en particulier en acier inoxydable, et où une couche médiane (14) est réalisée en aluminium.

7. Plaque de gril selon la revendication 5, **caractérisée en ce que** la plaque de gril (1) est constituée de trois couches (13, 14, 15), où une couche supérieure (13) et une couche inférieure (15) sont réalisées en acier, en particulier en acier inoxydable, et où une couche médiane (14) est réalisée en cuivre.

8. Plaque de gril selon au moins l'une des revendications 3 à 7, **caractérisée en ce que** la au moins une rainure (10, 11) s'étend à travers toutes les couches (14, 15) à l'exception de la couche supérieure (13).

9. Plaque de gril selon au moins une des revendications 1 à 8, **caractérisée en ce qu'**une rainure (10, 11) est agencée pour séparer la plaque de gril (1) en deux sections (2, 3).

10. Plaque de gril selon au moins une des revendications 1 à 8, **caractérisée en ce que** deux rainures (10, 11) sont agencées pour séparer la plaque de gril (1) en quatre sections (2, 3, 4, 5).

11. Plaque de gril selon la revendication 10, **caractérisée en ce que** les deux rainures (10, 11) sont agencées d'une manière croisée.

12. Plaque de gril selon au moins une des revendications 1 à 11, **caractérisée en ce que** la largueur (b) de la au moins une rainure (10, 11) est entre 1 mm et 30 mm.

13. Plaque de gril selon au moins une des revendications 1 à 12, **caractérisée en ce que** la plaque de gril (1) a une forme sensiblement rectangulaire.

14. Plaque de gril selon au moins une des revendications 1 à 12, **caractérisée en ce que** la plaque de gril (1) a une forme sensiblement arrondie.
